**Europäisches Patentamt**

**European Patent Office**

**Office européen des brevets**

(19)

(11) Publication number : **0 235 192 B2**

(12)

# NEW EUROPEAN PATENT SPECIFICATION

(45) Date of publication of the new patent specification : **04.05.94 Bulletin 94/18**

(51) Int. Cl.[5] : **G02B 6/38**

(21) Application number : **86905038.5**

(22) Date of filing : **24.07.86**

(86) International application number : **PCT/US86/01562**

(87) International publication number : **WO 87/01464 12.03.87 Gazette 87/06**

(54) **FERRULE MEMBER FOR TERMINATING FIBER OPTIC TRANSMISSION MEMBER.**

(30) Priority : **29.08.85 US 770827**

(43) Date of publication of application : **09.09.87 Bulletin 87/37**

(45) Publication of the grant of the patent : **23.01.91 Bulletin 91/04**

(45) Mention of the opposition decision : **04.05.94 Bulletin 94/18**

(84) Designated Contracting States : **DE FR GB IT NL SE**

(56) References cited :
**EP-A- 0 025 013**
**EP-A- 0 043 585**
**EP-A- 0 079 160**
**EP-A- 0 095 865**

(56) References cited :
**EP-A- 0 169 073**
**WO-A-86/00423**
**DE-A- 2 758 964**
**DE-A- 3 108 109**
**DE-C- 2 711 670**
**GB-A- 2 030 314**
**GB-A- 2 081 468**
**JP-A-59 178 402**
**US-A- 4 264 128**

(73) Proprietor : **AMP INCORPORATED**
**P.O. Box 3608 470 Friendship Road**
**Harrisburg Pennsylvania 17105 (US)**

(72) Inventor : **DEEG, Emil, Wolfgang**
**501 Ohio Avenue**
**Lemoyne, PA 17043 (US)**

(74) Representative : **Warren, Keith Stanley et al**
**BARON & WARREN 18 South End Kensington**
**London W8 5BU (GB)**

EP 0 235 192 B2

## Description

**Description for all designated Contracting States: DE FR GB IT NL SE**

This invention relates to ferrule members used in making fiber optic connections and methods of making those ferrule members. More particularly, this invention relates to ferrule members which are made in such a way that the tips of the ferrules have the same coefficient of thermal expansion as the fibers which they are holding. This helps to eliminate or greatly reduce the stresses between fiber and ferrule during thermocycling, and thus avoids relative movement between these two elements, which is also known as "pistoning".

Most fiber optics connectors contain a "ferrule" made from either an organic polymer or from high density alumina or a metal. The main function of the nose piece or "tip" of the ferrule is to provide for a fixed position of a fiber endface relative to which endfaces of other fibers or of devices can be positioned. Movement in axial direction of a fiber within the ferrule can cause increased optical connector loss or, if two fiber ends are in direct contact with each other, may even result in one of them being crushed. Movement of the endface of the glass fiber relative to the endface of the surrounding ferrule must be expected during temperature cycling of the assembled connector terminus if the thermal expansion of fiber and ferrule are not closely matched. Such a mismatch exists for the ferrules made from metals, high density alumina or various engineering plastics and the most commonly used mono- and multimode fibers for telecommunication and signal transmission purposes. These fibers are made of oxide glasses with amorphous silicondioxide ("fused silica", sometimes also referred to as "quartz glass") as major glass forming constituent. The core of the fiber may contain in addition to silica relatively large amounts (usually more than 5 wt.%) of one or more of the oxides of germanium, phosphorous, boron etc. These fibers are usually clad with fused silica for optical reasons and to facilitate manufacturing of preforms and fibers.

Fused silica has a coefficient of linear thermal expansion of approximately 0.6 ppm/degr.C, amorphous germaniumdioxide, the structural equivalent of fused silica, of approximately 7.7 parts per million per degree C (ppm/degr.C). Any addition to fused silica raises the thermal expansion noticeably. A reasonable estimate for the coefficients of linear thermal expansion, valid within the useful temperature range for such fibers. would be from 0.5 to 3 ppm/degr.C. Therefore, materials suitable for ferrules thermally matched to low expansion fibers should cover a range for the coefficient of linear thermal expansion from approximately 0 to 3 ppm/degr.C.

If, however, optical fibers made of materials with a coefficient of thermal expansion noticeably above 3 ppm/degr.C are to be sealed in a fiber optics terminus, the ferrules holding the fiber must be made of a material of a correspondingly higher thermal expansion. Such fibers are e.g. those with a core of multi component, high index optical glass and a lower index cladding. The most frequently used glass clad with glass and glass clad with plastic fibers require ferrule materials with coefficients of linear thermal expansion ranging from about 5 to 9 ppm/degr.C.

Plastic clad with plastic fibers have even higher thermal expansion. For thermal matching they require ferrule materials with coefficients of linear thermal expansion from about 40 to 80 ppm/degr.C. This can be accommodated by organic polymers (e.g. polyesters such as polybutylene terephthalate (PBT) with or without fillers) which are used presently for fiber optics connector ferrules.

Most unfilled organic polymers expand and contract respectively by approximately 1 percent if exposed to a temperature change from, for example, -50 to 150°C. Although this coefficient is temperature dependent, it can be used to compare materials of greatly different thermal expansivities. The expansion of 1 percent mentioned above is caused by an average coefficient of linear thermal expansion of about 60 ppm/degr.C. The coefficient of linear thermal expansion for most metals is in the same order of magnitude as for plastics, i.e., 10 ppm/degr.C.

Expansion coefficients of optical fibers used for telecommunication lines are in the order of 0.1 ppm/ degr.C. Consequently, their thermal expansion is less by a factor of 0.01 than that of the plastics and metals used for ferrules. As these ferrules serve - via suitable adhesives - as mechanical support for the end of an optical waveguide, severe thermal stresses can develop between the fiber and the supporting ferrule. These stresses can exceed the bond strength between the fiber and the adhesive and between the ferrule and the adhesive, respectively. For exceptionally strong bonds, the thermal stresses can exceed the cohesive strength of the adhesive itself. Even if the adhesive would not fail, the forces acting on the front end of the fiber result in an axial movement causing the fiber to either protrude or to recede relative to its original position. This relative movement is known as pistoning.

Many patents in the prior art are concerned either with properly aligning the fiber within a ferrule so that distortion does not occur at the connection point between two optical fibers or with the problem of rigidly maintaining the fiber within a ferrule so that, once again, light transmission qualities are not impaired.

Thus, for example, U.S. Patent No. 4,113,346 to Jackson, et al., teaches a method of making optical fiber terminations so that an optical fiber secured in a ferrule lies approximately along the ferrule axis. Similarly, U.S. Patent No. 4,261,642 to Lewis, et al., teaches a method of urging two ferrules together to ensure accurate alignment between two optical fibers, and U.S. Patent No. 4,397,552 to Parr teaches a method of first cooling and then contracting a tubular housing in order to grip an optical fiber and properly align it. The Parr patent utilizes the differences in coefficient of thermal expansion between different materials, but does so so that the optical fiber is more snugly grasped (column 1, lines 50-69). This patent does not teach making a ferrule which has the same coefficient of thermal expansion as an optical fiber.

**Description for the Contracting States: DE FR GB**

U.S. Patent No. 4,113,349 to Stiles also concerns coefficients of thermal expansion, but this property is used so that a ferrule can more snugly fit about an optic fiber. There is no discussion of the difference in coefficients of thermal expansion between a ferrule and the fibers and there is no discussion of the problem of pistoning.

EP-A- 79160 discloses a ferrule made of plastics material containing a terminating end of an optical fiber.

DE-C- 27 11 670 discloses a ferrule made of glass or quartz which has substantially the same coefficient of thermal expansion as the optical fiber contained in the ferrule.

Thus, although there are several patents which discuss methods of accurately connecting optical fibers to ensure high quality light transmission, there appears to be no discussion in the prior art concerning the problem of pistoning or how the stresses created by the varying coefficients of thermal expansion may break the bonds between the optic fibers and the ferrules which are holding them. The focus to date has been directed to improving bond strength by such means as providing stronger adhesives, treating the surfaces of polymeric ferrules and/or using carbon fibers in polymeric ferrules to increase the surface area for adhesive bonding. The present invention provides means for eliminating the problem of pistoning.

It is an object of this invention to provide fiber optics termini for free or fixed connectors with greatly reduced thermal expansion mismatch between the optic fibers and a device containing these fibers.

It is a further object of this invention to eliminate or greatly reduce the stresses between fiber and ferrule during thermal cycling, thus avoiding the relative movement or pistoning between these two elements.

According to one aspect of the invention, therefore, the invention consists in a ferrule member as defined in claim 1.

It is a still further object of this invention to provide the use of liquid crystal polymers as ferrule members which exhibit exceptionally low coefficients of thermal expansion in the flow direction in order to mold single or multiple component ferrule members in a direction which coincides with the direction of the axis of the fiber to be held by said ferrule member.

A still further object of this invention is to modify ferrule members by the addition of fillers having a Mohs hardness below 2 to the liquid crystal polymers in order to increase the expansion coefficient without giving up the concept of a flexible, polishable ferrule member.

According to another aspect thereof, the invention consists in a method as defined in claim 8.

The fiber optics ferrule member preferably has a tip with the following properties:

(a) a thermal expansion within a temperature range from approximately -50 to 150°C which is of the same order of magnitude as that of the optical wave-guides consisting essentially of $SiO_2$ glass doped with index modifying material such as, for example, germanium dioxide, phosphorous pentoxide, boron oxide or fluorine, and

(b) essentially free of thermal and elastic after effects in the critical, axial direction.

Also provided are combinations of the fiber and ferrule member and methods of making the fiber optics terminus of this invention from certain polymeric materials.

The thermal and elastic after effects referred to above are very pronounced in most organic polymeric materials as discussed for instance in an article by V.A. Kargin entitled "Mechanical Properties", *Encyclopedia of Polymer Science and Technology,* Vol.8, pages 445-516, the entire disclosure of which is herein incorporated by reference. This behavior results in dimensional changes of plastic parts making them unsuitable for precision optical elements. It has been found that injection molded parts made of the proposed polymeric materials of the present invention are, as compared to other organic polymers, free of these after effects. At ambient temperature (about 25°C) no shrinkage in the flow direction could be observed. The observed deviations at 100°C were within the range of experimental error.

Further provided are combinations of inorganic materials for ferrule members or termini which exhibit rates of thermal expansion approximately equal to that of the fiber held by said ferrule member. In addition to the advantages previously described, ferrule members made from inorganic materials are essentially free of thermal and elastic after effects in the radial as well as the axial direction. Furthermore the ferrule members are harder, less susceptible to damage during polishing and are stable at higher temperatures than the plastic ferrules.

For a better understanding of the invention reference will now be made, by way of example to the accompanying drawings in which:-

Figure 1 is an exploded view of a typical fiber optic interconnection assembly;

Figure 2 is a cross-sectional schematic view of a mold for preparing ferrules used in accordance with this invention,

Figures 3 to 6 are cross-sectional views of typical fiber optic connector ferrules that may be made with polymeric materials in accordance with this invention, and

Figures 7 to 10 are cross-sectional views of typical fiber optic connector ferrules that may be made with inorganic materials.

The present invention provides for the selection of materials which have the desired coefficient of thermal expansion either alone or with the addition of various fillers, and with the selection of a process by which the ferrules made from the desired materials are provided for use in fiber optics connectors.

The invention is suitable for use with any type ferrule and any type optical fibers. It should be understood that the essential concept of this invention is that the coefficient of expansion of the tip of the ferrule is to be essentially the same as the coefficient of expansion of the optical fiber.

## Description for the Contracting States: IT NL SE

U.S. Patent No. 4,113,349 to Stiles also concerns coefficients of thermal expansion, but this property is used so that a ferrule can more snugly fit about an optic fiber. There is no discussion of the difference in coefficients of thermal expansion between a ferrule and the fibers and there is no discussion of the problem of pistoning.

EP-A- 79160 discloses a ferrule made of plastics material containing a terminating end of an optical fiber.

DE-C- 27 11 670 discloses a ferrule made of glass or quartz which has substantially the same coefficient of thermal expansion as the optical fiber contained in the ferrule.

Thus, although there are several patents which discuss methods of accurately connecting optical fibers to ensure high quality light transmission, there appears to be no discussion in the prior art concerning the problem of pistoning or how the stresses created by the varying coefficients of thermal expansion may break the bonds between the optic fibers and the ferrules which are holding them. The focus to date has been directed to improving bond strength by such means as providing stronger adhesives, treating the surfaces of polymeric ferrules and/or using carbon fibers in polymeric ferrules to increase the surface area for adhesive bonding. The present invention provides means for eliminating the problem of pistoning.

It is an object of this invention to provide fiber optics termini for free or fixed connectors with greatly reduced thermal expansion mismatch between the optic fibers and a device containing these fibers.

It is a further object of this invention to eliminate or greatly reduce the stresses between fiber and ferrule during thermal cycling, thus avoiding the relative movement or pistoning between these two elements.

According to one aspect thereof the invention accordingly consists in a ferrule member as defined in claim 1.

It is a still further object of this invention to provide the use of liquid crystal polymers as ferrule members which exhibit exceptionally low coefficients of thermal expansion in the flow direction in order to mold single or multiple component ferrule members in a direction which coincides with the direction of the axis of the fiber to be held by said ferrule member.

A still further object of this invention is to modify ferrule members by the addition of fillers having a Mohs hardness below 2 to the liquid crystal polymers in order to increase the expansion coefficient without giving up the concept of a flexible, polishable ferrule member.

According to a further aspect thereof, the invention consists in a method as defined in claim 9.

The fiber optics ferrule member preferably has a tip with the following properties:

(a) a thermal expansion within a temperature range from approximately -50 to 150°C which is of the same order or magnitude as that of the optical waveguides consisting essentially of $SiO_2$ glass doped with index modifying material such as, for example, germanium dioxide, phosphorous pentoxide, boron oxide or fluorine, and

(b) essentially free of thermal and elastic after effects in the critical, axial direction.

Also provided are combinations of the fiber and the ferrule member and methods of making the fiber optics terminus of this invention from certain polymeric materials.

The thermal and elastic after effects referred to above are very pronounced in most organic polymeric materials as discussed for instance in an article by V.A. Kargin entitled "Mechanical Properties", *Encyclopedia*

*of Polymer Science and Technology,* Vol. 8, pages 445-516, the entire disclosure of which is herein incorporated by reference. This behavior results in dimensional changes of plastic parts making them unsuitable for precision optical elements. It has been found that injection molded parts made of the proposed polymeric materials of the present invention are, as compared to other organic polymers, free of these after effects. At ambient temperature (about 25°C) no shrinkage in the flow direction could be observed. The observed deviations at 100°C were within the range of experimental error.

Further provided are combinations of inorganic materials for ferrule members or termini which exhibit rates of thermal expansion approximately equal to that of the fiber held by said ferrule member. In addition to the advantages previously described, ferrule members made from inorganic materials are essentially free of thermal and elastic after effects in the radial as well as the axial direction. Furthermore the ferrule members are harder, less susceptible to damage during polishing and are stable at higher temperatures than the plastic ferrules.

For a better understanding of the invention reference will now be made, by way of example to the accompanying drawings in which:-

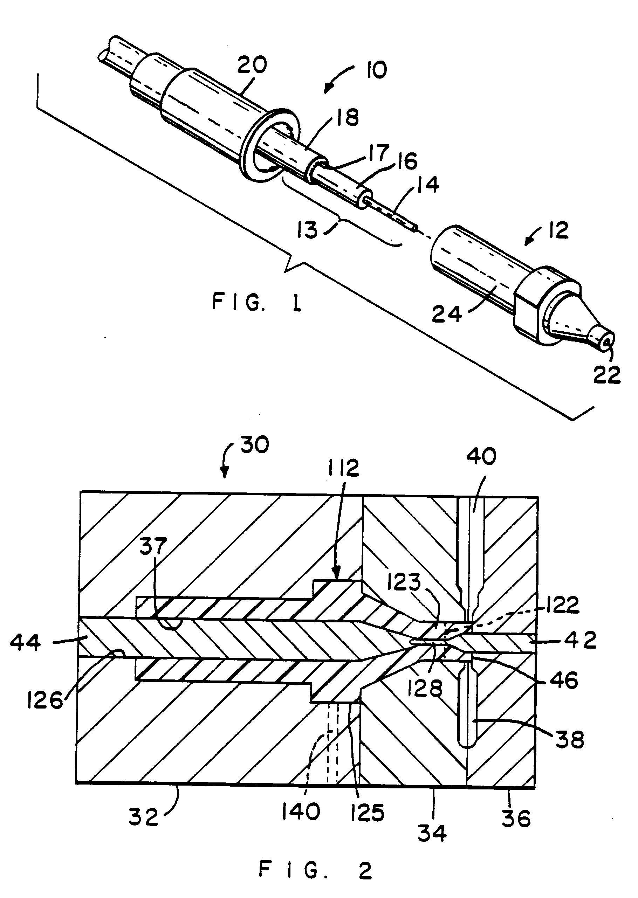

Figure 1 is an exploded view of a typical fiber optic interconnection assembly;

Figure 2 is a cross-sectional schematic view of a mold for preparing ferrules used in accordance with this invention,

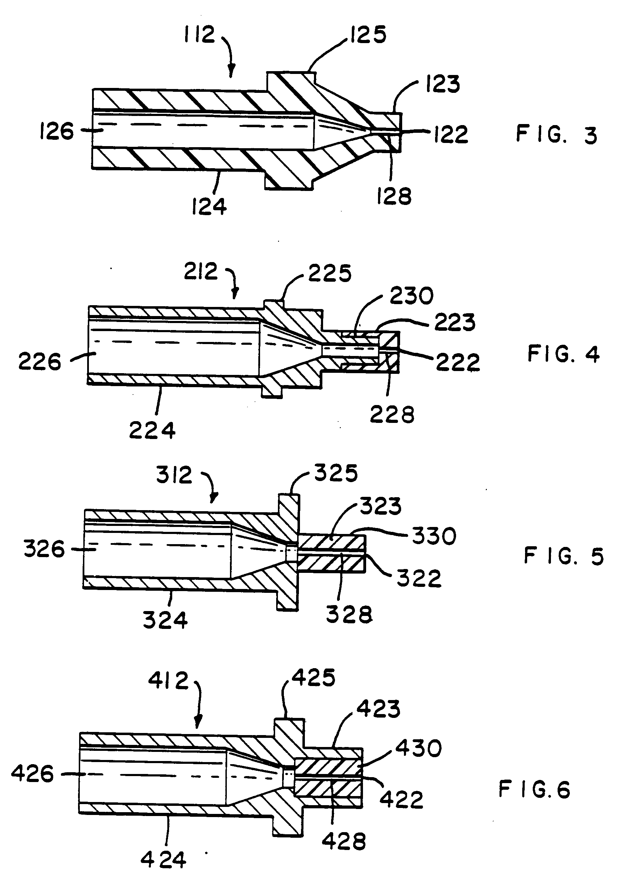

Figures 3 to 6 are cross-sectional views of typical fiber optic connector ferrules that may be made with polymeric materials, in accordance with this invention, and

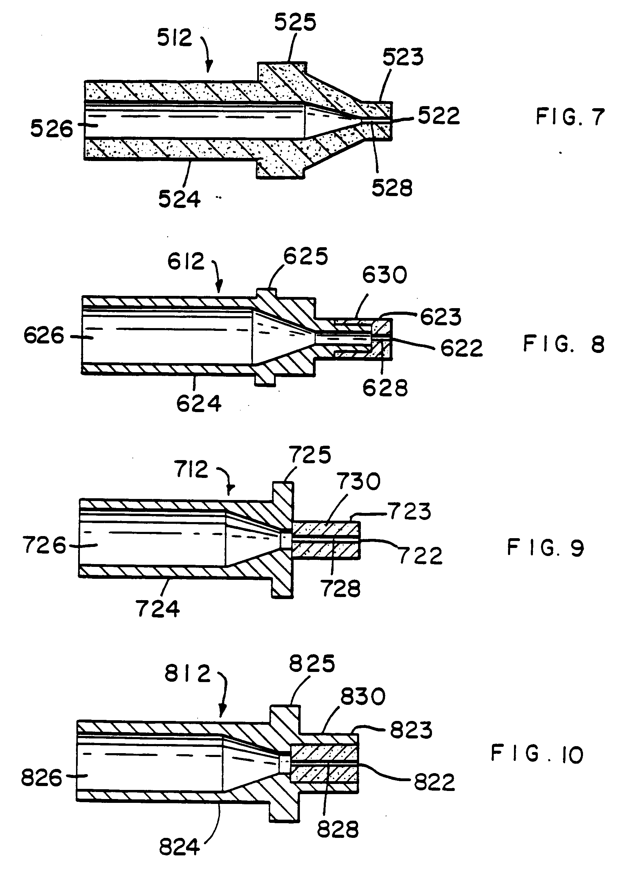

Figures 7 to 10 are cross-sectional views of typical fiber optic connector ferrules that may be made with inorganic materials.

The present invention provides for the selection of materials which have the desired coefficient of thermal expansion either alone or with the addition of various fillers, and with the selection of a process by which the ferrules made from the desired material are provided for use in fiber optics connectors.

The invention is suitable for use with any type ferrule and any type optical fibers. It should be understood that the essential concept of this invention is that the coefficient of expansion of the tip of the ferrule is to be essentially the same as the coefficient of expansion of the optical fiber.

**Description for all designated Contracting States: DE FR GB IT NL SE**

Optical fibers are generally described as being low expansion, medium expansion and high expansion fibers. The following definitions of these terms will be used for purposes of this patent application. The term low expansion fibers designates those fibers having a coefficient of expansion of no greater than 2 ppm/degr.C. Low expansion fibers include fused silica, and most gradient index fibers. Medium expansion fibers have a coefficient of expansion from 2 to 9 ppm/degr.C and include step index optical glass fibers and some gradient index fibers. High expansion fibers are those where the coefficient of expansion is greater than 9 ppm/degr.C and include plastic core fibers and IR transmitting chalcogenide glass fibers.

In accordance with a main aspect of the invention, the plastics to which fillers may be added and which are used for making the ferrules of the present invention are liquid crystal polymer (LCP) plastics. These LCP plastics are a family of high performance resins which can be injection molded and extruded and are available commercially from Celanese Specialties Operations, Summit, New Jersey, and DARTCO Mfg., Inc., Paramus, New Jersey.

Unfilled nematic thermoplastic polymers, also known as "liquid crystal polymers" (LCPs)'or "self-reinforcing thermoplastics" (SRTs) exhibit anisotropic behavior with almost zero or even negative coefficients of linear thermal expansion in the direction of flow. Measured in this direction, they also show noticeably higher tensile modulus and tensile strength than the common "engineering plastics". Most of the properties of LCPs are very similar to those of other thermoplastic materials when measured normal to the direction of flow. Chemically, these high performance LCPs are characterized as "wholly aromatic polyesters". LCPs usually are inherently flame retardant and do not contain additives such as lubricants, plasticizers, etc. Such additives can be detrimental to forming a strong adhesive bond between the fiber and the inside wall of the ferrule.

Because of the low linear thermal expansion and the self-reinforcing nature of the LCPs in the flow direction, no fillers are required to achieve low expansion and high strength in at least one direction of a molded part. This eliminates the need for glass fiber or mineral fillers commonly used in the plastics industry. With the exception of soft minerals those fillers can cause scratches in the fiber endface during polishing. Such surface defects must be avoided because they contribute to scattering losses in fiber optics connections. It is also not necessary to introduce carbon fibers in PTB and other engineering plastics for the purpose of reducing thermal expansion and increasing strength and durability. Although carbon fibers as fillers do not produce noticeable scratches during polishing, they introduce another factor limiting the application of materials containing them: The finite electrical conductivity of carbon prohibits the use of ferrules made from such polymers, as does that of metals, in connectors for fiber optic devices located in electric fields. Carbon filled plastics are inherently black, thus limiting the color choice for articles made from them.

Referring now to Figure 1, a typical fiber optic connection assembly 10 is comprised of a ferrule 12, an optical fiber transmission member 13 having an optical fiber 14, and a metal bushing 20. The ferrule 12 has a fiber optic aperture 22 and a body 24. The optic fiber 14 has a buffer coating 16, an optional layer of strength members 17, and a protective sheath member 18 surrounding said strength members 17 and buffer layer 16. It will be understood, however, that this is simply one embodiment of a type of ferrule and optical fiber connection system which may be used, but any conventional ferrule/optical fiber assembly may be used within the scope of the invention so long as the coefficient of expansion of the tip of the ferrule and the optical fiber are essentially the same.

Figures 3 to 6 illustrate several embodiments of ferrules that may be made in accordance with this invention. Figure 3 shows a monolithic molded polymer ferrule 112 comprising a body member 124, having a shoulder 125, a bore 126 extending therethrough along which the end of the fiber optic transmission member extends. A section of the body 112 comprises tip 123 which includes a reduced diameter section of bore 126 along which an exposed section of an optical fiber member of the fiber optic transmission member is disposed. Tip 123 incorporates the fiber optic aperture 122, the exposed optical fiber member being securable to said tip by conventional methods.

It has been found that the thermal expansion of monolithic ferrules made from LCP can be varied from low to high depending upon the flow direction of the LCP as it is flowed into a mold such as the one 30 illustrated in Figure 2. When the LCP is introduced near an end of the mold cavity 37 so that the LCP flows from a direction that is parallel to the axis of the ferrule 112, the thermal expansion in the axial direction of resulting ferrule is low. When the LCP is introduced along the side of the cavity such as at the shoulder 125, (shown in phantom at 140) the LCP flows primarily in a radial direction around the core pins 42, 44 and the thermal expansion of the resulting ferrule 112 is higher. It is thought the higher value of thermal expansion is caused by the more turbulent flow of the material. This characteristic of LCP can be used to advantage by proper mold design and gating.

A cross section of the mold 30 shown in Figure 2 is representative of a type of mold used to produce monolithic LCP ferrules having a low thermal expansion. Standard mold materials and conventional injection molding methods are used to produce the parts. The unique features are the direction and symmetry at which the polymer is introduced into the mold 30. The mold 30 of Figure 2 is comprised of three sections 32, 34, 36 having a mold cavity 37 extending therethrough, and core pins 44 and 42 extending through the ends of the mold 30 and into the cavity 37, said core pins being dimensioned to form bore 126 and aperture 122.

The polymeric material is introduced into the mold cavity 37 at 40, flows into and fills cavity 37 and forms ferrule 112. A ring gate at 46 and bleeder 38 as are known in the art control the flow of the material into the cavity. For a ferrule having cylindrical symmetry, multiple orifice or ring gates concentric with the axis of the ferrule will provide for the desired laminar, paraxial flow. It is to be understood that the mold design of Figure 2 is representative of the various mold designs that may be used to produce monolithic ferrule members.

LCPs that are suitable for producing monolithic ferrule members are available from Celanese Specialties Operations, and are marketed under the designations LCP 2000 and LCP 4060 and DARTCO under the name XYDAR™. The composition of the LCPs from Celanese Operations are disclosed in U.S. Patent Nos. 4,161,470 and 4,330,457. The thermal expansion of ferrules produced from these material can be varied by the method of molding, as previously described, and by using fillers such as talc, graphite, montmorillonite and vermiculite.

Proper axial orientation may also be achieved by extruding LCP in the form of thick-wall capillaries. Figures 4 to 6 illustrates several embodiments 212, 312, 412 of ferrules using capillary members 230, 330 and 430 to form the ferrule tips 223, 323 and 423 respectively. These capillary members 230, 330, 430 are used with corresponding metal or plastic body members 224, 324, and 424. Figures 5 and 6 show capillary members 330, 430 that have been cut into segments and attached to body members 324, 424 by means of adhesive or pressure fitting, respectively. Since the low thermal expansion of the LCP material used for the capillary member occurs only in the axial direction and not the radial direction, it is desirable to correlate the radial thermal expansion of the LCP with the thermal expansion of the material used for the main body of the ferrule. If this is done, shear stress between the body 312 of Figure 5, and the capillary member 330 at the bonding surface will be minimized during thermal cycling.

Alternatively, it is possible to mold LCP material directly onto suitable metal or plastic bodies and subsequently drill the required hole through the member. Figure 4 shows a typical ferrule 212 made in the aforedescribed manner.

It has been discovered according to the present invention that the ferrules or ferrule tips of the present invention have greatly reduced axial thermal expansion mismatch between the glass fiber and the ferrule or other device which contains the fiber. This therefore eliminates or greatly reduces stresses between the fiber and the ferrule during thermal cycling and thus avoids relative movement between these two elements which is sometimes referred to as inward and outward pistoning. The liquid crystal polymers from which the ferrules are made exhibit exceptionally low coefficients of thermal expansion in the flow direction. By utilizing this feature, single or multiple component ferrules can be molded in a direction which coincides with the direction of the axis of the fiber to be held in place by the ferrule. This therefore overcomes a substantial problem in this art without giving up the concept of a flexible, polishable ferrule.

According to a further aspect of the invention, it is the addition of various fillers with certain Mohs hardness to the neat liquid crystal polymers which is responsible for increasing the expansion coefficient of these LCPs to the required value of approximately 0.6 or even 3.0 ppm/degr.C while retaining the concept of a flexible, polishable ferrule. Suitable filler materials which may be used as fillers for the LCP's along with their Mohs hardness number are indicated below in Table 1.

## TABLE 1

### Fillers Useful for Making Low Expansion, Soft, Plastic Fiber Optics Ferrules

| Material | Mohs Hardness Number |
|---|---|
| $Sb_bS_3$ | 2 |
| $As_2S_3$ | 1.5-2 |
| CuS | 1.5-2 |
| Graphite | 1 |
| $MoS_2$ | 1-1.5 |
| Montmorillonite | 1-2 |
| $B(OH)_3$ | 1 |
| α-sulfur | 1.5-2 |
| Talc | 1 |
| Vermiculite | 1-2 |
| $Bi_2S_3$ | 2 |

Preferred fillers for making these low expansion, soft plastic fiber optics termini include graphite. montmorillonite, vermiculite and talc.

While the procedure in this portion of the application has been directed to various polyester or plastic materials that may be used it is to be understood that this invention can be applied to any material which may be used alone or when modified with certain fillers to create a ferrule or ferrule tip which has a coefficient of thermal expansion which is the same as the optical fibers held by said ferrule. It is also to be understood that any fillers which have the required Mohs hardness can be used if they provide a coefficient of thermal expansion of the starting material so that it is essentially the same as the optical fibers. It is preferable that the starting material be moldable using conventional molding temperatures. The starting material preferably should be moldable at 350°C or less and should be thermotropic.

The following examples are included for purposes of illustration only and are not to be construed as limiting the scope of the invention except as indicated in the appended claims.

Example 1

Cylindrical rods of approximately 50 mm length were molded from unfilled (neat) LCP. Linear thermal expansion of segments of 25 mm in length cut from these rods was recorded continuously as a function of temperature by generally known dilatometric procedures. Measurements were taken parallel to the flow direction of the LCP. The results are given in table 2 under sample numbers 1 and 2.

Example 2

Rods were molded from neat LCP in the same manner as Example 1. Coefficients of linear expansion in the radial direction were measured as described above. The results are given in table 2 as sample numbers 3 and 4.

Example 3

Filled polymers comprising the base polymer with additions of talc were molded into ferrules using a mold having gating at the side of the shoulder of the ferrule. Coefficients of linear thermal expansion of ferrule tips measured in the axial direction are given in table 2 under sample numbers 5 to 8.

Example 4

Rods were molded from filled material in the same manner as those of Example 1. Coefficients of linear expansion were measured parallel to flow direction in the same manner as Example 1. The results are given in table 2 under sample numbers 9 to 12.

Table 2 gives the coefficients of expansion for the various samples described above. Samples 1 to 4 are for polymers of Examples 1 and 2 and Samples 5 to 12 are for filled polymers of Examples 3 and 4. Coefficients of Expansion are given in ppm/degree C.

## TABLE 2

### Coefficients of Expansion

| Sample No. | Polymer | % Talc | Temperature Range | | | |
|---|---|---|---|---|---|---|
| | | | -40-0°C | 0-50°C | 50-100°C | 100-150°C |
| 1 | LCP 2000 | -- | -1.5* | -0.6 | -0.9 | -0.4 |
| 2 | LCP 4060 | -- | -0.5* | -0.4 | -0.9 | 3.6 |
| 3 | LCP 2000 | -- | 42.0* | 88.0 | 120.0 | 190.0 |
| 4 | LCP 4060 | -- | 24.0* | 58.0 | 82.0 | 118.0 |
| 5 | LCP 2000 | 10 | 6.0 | 12.0 | 24.0 | -- |
| 6 | LCP 2000 | 20 | 9.1 | 20.2 | 27.8 | -- |
| 7 | LCP 4060 | 10 | 3.2 | 7.7 | 8.6 | -- |
| 8 | LCP 4060 | 20 | 4.1 | 9.7 | 19.2 | -- |
| 9 | LCP 2000 | 10 | 1.6 | 2.0 | 2.4 | 3.4 |
| 10 | LCP 2000 | 20 | 2.0 | 2.8 | 3.4 | 3.6 |
| 11 | LCP 4060 | 10 | 2.5 | 2.5 | 2.4 | 2.8 |
| 12 | LCP 4060 | 20 | 2.5 | 2.5 | 2.8 | 7.4 |

\* Measured -50 to 0°C

LCP 2000 available from Celanese Specialties Operations

LCP 4060 available from Celanese Specialties Operations

The above table clearly illustrates the advantages of the present invention. Samples 1 and 2 (unfilled LCP) have negative coefficients of expansion when measured in the flow direction. Samples 3 and 4, on the other hand, have positive coefficients of thermal expansion that demonstrate a difference of substantial magnitude than those of samples 1 and 2. Samples 5 and 6, versus 9 and 10 show the difference in coefficients of expansion of talc filled LCP 2000 when measured on samples prepared under turbulent versus laminar flow during molding. Samples 7 and 8 versus 11 and 12 demonstrate the same for LCP 4060 as base polymer. This difference is much less pronounced for filled than for neat materials. The filled materials are considered almost isotropic in their behavior. As can be seen from table 2, ferrules made from neat material are particularly suitable for low expansion fibers, while ferrules made from filled material are more suitable for medium and high expansion materials.

Inorganic materials may also be used to form the ferrules for fiber optics. Inorganic materials used for ferrules exhibit isotropic behavior relative to thermal expansion. That is the coefficient of thermal expansion is essentially the same whether measured axially or radially. Inorganic materials suitable for use with low, medium and high expansion fibers are primarily nonmetallics such as glass, glass ceramics and ceramics. Some metals are also suitable. Suitable materials falling within each of these categories will be disclosed below.

Figures 7 to 10 illustrate several embodiments of ferrules. Figure 7 shows a monolithic ceramic ferrule 512 having body member 524, a bore 526 which tapers to reduced diameter at 528 and the tip 523 incorporating the fiber optic aperture 522.

Figures 8 to 10 illustrate several embodiments 612, 712, 812 of ferrules using capillary members 630, 730 and 830 respectively. These capillary members 630, 730, 830 are used with corresponding metal or plastic body members 624, 724, and 824.

Figures 9 and 10 show capillary members 730, 830 that have been cast into segments and attached to body members 724, 824 by means of adhesive or pressure fitting respectively.

Alternatively it is possible to bond ceramic material onto suitable metal or plastic bodies and subsequently drill the required hole through the capillary member 630 as shown in Figure 8.

By using ferrules made from inorganic materials, it is possible to control the hardness of the ferrule as well as the thermal expansion. It is important that ferrules maintain integrity during grinding and polishing, e.g., that they have "micro-mechanical stability".

The endface of a fiber inserted into a ferrule and held there by an adhesive must be polished prior to use in a connector. It is known that the surface of a material that is harder relative to the material surrounding it assumes a convex shape while being surfaced on a flat wheel by grinding and polishing. Similarly, a material that is softer than the surrounding matrix will assume a concave surface in the same type of surfacing operation. Therefore, after polishing the fiber endfaces are slightly concave or convex depending on the hardness of the ferrule material relative to the hardness of the fiber. Organic polymers and most metals used for securing the optical fibers in a terminus are softer than glass, while polycrystalline alumina is harder. Thus, in addition to the thermal mismatch between fibers and ferrules there is also introduced a lens effect at the ends of the fiber owing to the specific properties of the materials presently used for the preparation of fiber optics termini. The materials are in the same hardness range as glass and fused silica, including gradient fibers. This offers the advantage of preparing surfaces at the endface of the fiber that are coplanar with the surrounding ferrule surface and minimizes problems with optical mismatch.

Depending on the method of manufacture, specific articles made of such compositions are classified as "ceramic", "glass-ceramic" or "sintered glass" products. Low expansion ceramic articles are made by the well known ceramic processes. Glass-ceramic products are made from a melt of suitable composition which is expected to yield a material of the desired properties but contains also specific nucleating agents. The material is melted, then formed into articles using known forming techniques. The formed articles are heat treated to produce articles having low expansion crystals and a small amount of glassy phase. Sintered glass products are prepared from glass powders of defined particle size distributions, pressed to shape and then sintered under controlled conditions. Small amounts (less than 1% wt.) of a binder such as paraffin oil, wax and polyvinyl alcohol are added to the glass powder prior to pressing. The binder material is burned off during the early stages of the firing process. A variation of the sintering method is to add nucleating agents and components to the glass powders to achieve low expansion materials of a composition similar to those of ceramic and glass-ceramic products based on the systems mentioned above. A major disadvantage of fiber optic connectors made from sintered products or low expansion bodies prepared by conventional ceramic techniques is that particles may come loose during grinding and polishing procedures, even when these steps are conducted under relatively low external mechanical stress.

Ferrule materials having high micro-mechanical stability are desirable because of the polycrystalline nature of ceramic materials wherein a glass phase binds the crystals to each other. The different types of ceramics vary not only in chemical composition but also in the volume ratio of glass to crystalline phase. A high value of this ratio is usually associated with dense ceramic bodies.

Porous ceramic bodies can lose individual crystals during grinding and polishing. These crystals can move across the fiber endface and cause scratches and pits in the surface.

Inorganic, non-metallic materials with very low, even negative thermal expansion have been known for more than five decades and are described extensively in the ceramic and glass literature. The most frequently used and best known of these substances are found in the ternary systems lithia-alumina-silica and magnesia-alumina-silica. The minerals causing the low thermal expansion coefficients in the first system are

beta-eucryptite ( - 6.4 ppm/degr.C for 25 - 100 degr.C)

and

beta-spodumen (0.9 ppm/degr.C for 25 - 1000 degr.C).

In the second system the low expansion phase is

cordierite (2.6 ppm/degr.C for 25 - 700 degr.C).

Other systems containing low expansion crystalline modifications are alumina-titania-silica and baria-alumina-silica. Solid solutions of one crystal phase in another are possible and have also been utilized in making low expansion ceramics and glass ceramics.

The inorganic, non-metallic materials considered here are inherently brittle which requires special design considerations. Sharp edges and corners must be avoided in those areas of a body that are expected to be exposed to tensile stress. It is preferable, therefore, to utilize the low thermal expansion of these non-metallic materials in that part of a ferrule that holds the fiber and use ductile or plastic materials in those portions where tensile stresses are to be expected. One approach to combine the low expansion inorganic materials with ductile metals is to heat shrink a metal body around the low expansion tip. The degree of utility of material combinations for such designs is basically determined by the difference in thermal expansion of the components.

Owing to the high coefficient of thermal expansion of most metals, metal ferrules are generally suitable for use with high expansion fibers. These metals include for example brass, stainless steel and alloys of aluminum. One iron-nickel alloy known as Invar has an extremely low coefficient of thermal expansion and could be used for low expansion fibers. Nickel-Resist Type 5 alloy may be used with medium expansion fibers.

While the procedures in this portion of the application have been directed primarily to various ceramic material having a coefficient of thermal expansion to within 20 percent of the glass fiber, it is to be understood that this invention can be applied to any material which may be used alone or modified with certain fillers to create a ferrule or ferrule tip which has approximately the same coefficient of thermal expansion as the optical fibers being held by the ferrule.

In the drawings and specification, there have been set forth preferred embodiments, and although specific terms are employed, they are used in a generic and descriptive sense only.

The following examples of suitable inorganic materials are included for purposes of illustration only.

Example 5

Hollow, cylindrical billets of clear, homogeneous fused silica having a 100 mm o.d. (outer diameter) and 7.5 mm i.d. (inner diameter) were prepared by centerless grinding and core drilling. The preformed billets were heated in a cylindrical furnace to a uniform temperature of approximately 1600°C and drawn down to a tube of approximately one fourth the original size. Sections of the resulting tube were further drawn down until a capillary having 2 mm o.d. and 0.150 mm i.d. was formed. Small segments of the length desired for a ferrule tip were cut from the capillary and inserted at a temperature of at least 200°C into a metal body of a ferrule of the type shown in Figure 10. The surrounding metal forms a heat shrink seal around the capillary thus holding it securely in place at ambient temperatures. Fused silica has a thermal coefficient of expansion of 0.6 ppm/degr.C and is therefore suitable for use with low expansion fibers.

Example 6

Glass ceramic materials may also be formed into capillaries. The mixture of materials known to yield articles of the desired coefficient of linear thermal expansion is melted and formed into thick-wall capillaries having 0.15 mm i.d. and 2 mm o.d. by means known in the art of glass making. The capillaries are heat treated to nucleate the vitreous material and to develop the desired crystalline phase. The capillaries may be used in a metal ferrule body of the type shown in Figure 10 as described above. The following are representative examples of known glass-ceramic compositions having a low coefficient of linear thermal expansion. All precentages are by weight.

| | | | |
|---|---|---|---|
| $SiO_2$ | 54.5 | 70.7 | 45.5 |
| $TiO_2$ | 5.5 | 4.8 | 11.5 |
| $Al_2O_3$ | 34.5 | 18.1 | 30.0 |
| MgO | -- | -- | 12.5 |
| $Li_2O$ | 5.5 | 2.6 | -- |
| Coeff. of thermal expansion ppm/degr.C | 0.1 | 0.5 | 1.4 |

Example 7

The low expansion glass ceramic mixtures as described in Example 6 may also be formed into monolithic ferrules of the type shown in Figure 7 by pressing the glass melt into a mold having appropriate core pins and subsequently heat treating the formed article. The material may also be pressed and formed into a ferrule having a solid tip. The hole is drilled in the ferrule subsequent to heat treating the formed article.

Example 8

Capillaries for ferrules may also be made by using acid soluble glass cores. A cylindrical, two component preform of 25 mm o.d., and 2 mm i.d. is prepared in the same manner as making preforms for step-index optical fibers by the method known as rod/tube drawing. The preform is drawn down into a rod having 2.5 mm o.d. and a 0.2 mm core diameter. Rods, cut to the desired length are exposed to an ultrasonically agitated 0.5 normal nitric acid bath at 50°C for approximately 4 hours, followed by rinsing and cleaning with deionized water. After this treatment the acid soluble glass core is leached from the rod to form a capillary. The capillary may be used in metal or polymeric ferrule bodies as previously described.

Representative materials suitable for use with this procedure consists of a glass comprised of 75.9% $SiO_2$, 8.6% $B_2O_3$, 4.4% $Al_2O_3$, 0.5% CaO, 3.9% BaO and 6.7% $Na_2O$ and an acid soluble core material comprised of 4.5% $SiO_2$, 53% $B_2O_3$, 10% $Al_2O_3$, 10% PbO, 17% ZnO and 5% $K_2O$. The resultant glass capillary has a coefficient of thermal expansion of 4.8 ppm/degr.C and is, therefore, suitable for use with medium expansion fibers.

Example 9

The glass composition of Example 8 may also be formed into ferrules of the type shown in Figure 7 by sintering techniques. Bulk glass is crushed and ground. Particles ranging from approximately 1 to 5 μm in size are mixed with 0.7% of its weight with paraffin oil and pressed into a mold using a combustible filament "core pin" in the tip of the ferrule. This "core pin" burns off during the initial heat treating process used to evaporate the binder, thus leaving a cylindrical hole in the tip of the ferrule. After sintering the ferrule, the hole may be enlarged by reaming.

Example 10

Ferrules for use with high expansion fibers may be made using thickwall capillaries made from glasses having a high coefficient of thermal expansion, by methods previously described or other methods known in the art. The capillaries may be used in metal or polymeric bodies as previously described. Owing to the high coefficient of thermal expansion of the glass insert, the metal used should be one that also has a relatively high coefficient of thermal expansion such as aluminum or brass. A representative composition yielding a glass with a high coefficient of expansion is comprised of 73% $SiO_2$, 1.0 % $Al_2O_3$, 4% MgO, 5% CaO and 17% $Na_2O$. The coefficient of thermal expansion for this glass is 9.2 ppm/degr.C.

## Claims

### Claims for the following Contracting States : DE, FR, GB

1. A ferrule member (12) containing a terminating end of a fiber optic transmission member (13), comprising a body member (24) having a bore extending therethrough along which the end of the fiber optic transmission member (13) extends, a section of said body member including a reduced diameter section of said bore (22) along which an exposed section of an optical fiber member (14) of the fiber optic transmission member (13) is disposed, at least said section of said body member being made of a plastics material, characterized in that said material has substantially the same coefficient of thermal expansion in the axial direction as that of the optical fiber member (14), said material being selected from the group consisting of: liquid crystal polymers and filled liquid crystal polymers, whereby any axial movement between said section of said body member (24) and said fiber member (14) causing said fiber member (14) either to protrude or recede relative to its original position is essentially overcome, and in that said ferrule member (12) further has essentially the same grinding and polishing hardness as the material of the optical fiber member (14) of the fiber optic transmission member (13).

2. A ferrule member (12) as defined in claim 1, further characterized in that said body member (24) is made of material having substantially the same coefficient of thermal expansion in the axial direction as that of the fiber optic transmission member (13) to overcome said axial movement.

3. The ferrule member (12) as defined in claim 1 or 2, wherein said material has a coefficient of thermal expansion within a temperature range from approximately -50 to 150°C which is of the same order of magnitude as that of fiber optic transmission members consisting essentially of silicon dioxide glass doped with index modifying material, said material being essentially free of thermal and elastic after effects in the direction parallel to the fiber axis.

4. The ferrule member (12) as defined in claim 1, 2 or 3, wherein said filled plastic includes a filler selected from the group consisting of graphite, montmorillonite, talc, vermiculite, antimony sulfide, arsenic sulfide, cupric sulfide, gypsum, molybdenum sulfide, boron hydroxide, sulfur and bismuth sulfide.

5. The ferrule member (12) as defined in claim 1, 2 or 3, wherein said liquid crystal polymer is a fully aromatic liquid crystal polymer.

6. The ferrule member (12) as defined in claim 1, 2 or 3, wherein said ferrule member has a coefficient of thermal expansion in its radial direction that is essentially the same as that in its axial direction.

7. The ferrule member (12) as defined in claim 1, 2 or 3, wherein said material has a coefficient of thermal expansion within 20 percent that of the optical fibers.

8. A method for making a ferrule member (12) for terminating a fiber optic transmission member (13), said ferrule member (12) being comprised of a body member (24) having a bore (26) extending therethrough along which an end of the fiber optic transmission member (13) extends, a section of said body member (24) including a reduced diameter section of said bore (26) along which an exposed section of an optical fiber member (14) of the fiber optic transmission member (13) is disposed, the method comprising selecting a fiber optic transmission member (13); selecting from the group consisting of liquid crystal polymers and filled liquid crystal polymers a material for said section of the body member (24) wherein said material further has essentially the same grinding and polishing hardness as the material of the optical fiber member (14) of the fiber optic transmission member (13) and said material has substantially the same coefficient of thermal expansion in the axial direction as that of optical fiber member (14) of the fiber optic transmission member (13); and forming said material into said ferrule member (12); whereby when said fiber optic transmission member (13) is terminated with said ferrule member (12), any axial movement between said ferrule member (12) and said optical fiber member (14) of said fiber optic transmission member (13) causing said fiber member (14) either to protrude or recede relative to its original position is essentially overcome.

### Claims for the following Contracting States : IT, NL, SE

1. A ferrule member (12) containing a terminating end of a fiber optic transmission member (13), comprising a body member (24) having a bore extending therethrough along which the end of the fiber optic transmission member (13) extends, a section of said body member including a reduced diameter section of said bore (22) along which an exposed section of an optical fiber member (14) of the fiber optic transmission member (13) is disposed, at least said section of said body member being made of plastics material, characterized in that said material has substantially the same coefficient of thermal expansion in the axial direction as that of the optical fiber member (14), said material being selected from the group consisting of: liquid crystal polymers and filled liquid crystal polymers, whereby any axial movement between said section of said body member (24) and said fiber member (14) causing said fiber member (14) either to protrude or recede relative to its original position is essentially overcome.

2. A ferrule member (12) as defined in claim 1, further characterized in that said body member (24) is made of material having substantially the same coefficient of thermal expansion in the axial direction as that of the fiber optic transmission member (13) to overcome said axial movement.

3. The ferrule member (12) as defined in claim 1 or 2, wherein said material has a coefficient of thermal expansion within a temperature range from approximately -50 to 150°C which is of the same order of magnitude as that of fiber optic transmission members consisting essentially of silicon dioxide glass doped with index modifying material, said material being essentially free of thermal and elastic after effects in the direction parallel to the fiber axis.

4. The ferrule member (12) as defined in claim 1, 2 or 3, wherein said filled plastic includes a filler selected from the group consisting of graphite, montmorillonite, talc, vermiculite, antimony sulfide, arsenic sulfide, cupric sulfide, gypsum, molybdenum sulfide, boron hydroxide, sulfur and bismuth sulfide.

5. The ferrule member (12) as defined in claim 1, 2 or 3, wherein said liquid crystal polymer is a fully aromatic liquid crystal polymer.

6. The ferrule member (12) as defined in claim 1, 2 or 3, wherein said ferrule member has a coefficient of thermal expansion in its radial direction that is essentially the same as that in its axial direction.

7. The ferrule member (12) as defined in claim 1, 2 or 3, wherein said material has a coefficient of thermal expansion within 20 percent that of the optical fibers.

8. The ferrule member as defined in claim 1, 2 or 3, wherein said ferrule member further has essentially the same grinding and polishing hardness as the material of the fiber member (14) of the fiber optic transmission member (13).

9. A method for making a ferrule member (12) for terminating a fiber optic transmission member (13), said ferrule member (12) being comprised of a body member (24) having a bore (26) extending therethrough along which an end of the fiber optic transmission member (13) extends, a section of said body member (24) including a reduced diameter section of said bore (26) along which an exposed section of an optical fiber member (14) of the fiber optic transmission member (13) is disposed, the method comprising selecting a fiber optic transmission member (13); selecting from the group consisting of liquid crystal polymers and filled liquid crystal polymers a material for said body section of said ferrule member (12) wherein said material has substantially the same coefficient of thermal expansion in the axial direction as that of optical fiber member (14) of the fiber optic transmission member (13); and forming said material into said ferrule member (12); whereby when said fiber optic transmission member (13) is terminated with said ferrule member (12), any pistoning effect between said ferrule member (12) and said optical fiber member (14) of said fiber optic transmission member (13) causing said fiber member (14) either to protrude or recede relative to its original position is essentially overcome.

**Patentansprüche**

**Patentansprüche für folgende Vertragsstaaten : DE, FR, GB**

1. Zwingenelement (12), das ein Abschließende eines Lichtleiterübertragungselements (13) enthält, mit einem Körperelement (24) mit einer sich durch dieses hindurcherstreckenden Bohrung, entlang derer sich das Ende des Lichtleiterübertragungselements (13) erstreckt, wobei ein Abschnitt des Körperelements einen Abschnitt der Bohrung (22) mit reduziertem Durchmesser aufweist, entlang dessen ein freigelegter Abschnitt eines Lichtleiterelements (14) des Lichtleiterübertragungselements (13) angeordnet ist, wobei wenigstens der genannte Abschnitt des Körperelements aus einem Kunststoffmaterial hergestellt ist, dadurch gekennzeichnet, daß das genannte Material im wesentlichen denselben Wärmeausdehnungskoeffizienten in Axialrichtung wie das Material des Lichtleiterelements (14) besitzt, wobei das Material ausgewählt ist aus der Gruppe bestehend aus: Flüssigkristallpolymeren und verstärkten Flussigkristallpolymeren, wodurch jegliche axiale Bewegung zwischen dem Abschnitt des Körperelements (24) und dem Lichtleiterelement (14), die das Lichtleiterelement (14) dazu veranlaßt, sich gegenüber seiner ursprünglichen Position vorzuschieben oder zuruckzuziehen, im wesentlichen überwunden ist, und daß das Zwingenelement (12) außerdem im wesentlichen dieselbe Schleif- und Polierhärte wie das Material des Lichtleiterelements (14) des Lichtleiterübertragungselements (13) aufweist.

2. Zwingenelement (12) nach Anspruch 1,
weiterhin dadurch gekennzeichnet, daß das Körperelement (24) zur Überwindung der Axialbewegung aus einem Material mit im wesentlichen demselben Wärmeausdehnungskoeffizienten in Axialrichtung wie das Material des Lichtleiterübertragungselements (13) hergestellt ist.

3. Zwingenelement (12) nach Anspruch 1 oder 2,
wobei das Material einen Wärmeausdehnungskoeffizienten innerhalb eines Temperaturbereichs von ca. -50 bis 150°C aufweist, wobei dies in derselben Größenordnung liegt wie bei Lichtleiterübertragungselementen, die im wesentlichen aus Siliziumdioxidglas dotiert mit indexmodifizierendem Material bestehen, wobei das Material im wesentlichen frei ist von thermischen und elastischen Nachwirkungen in der zu der Lichtleiterachse parallelen Richtung.

4. Zwingenelement (12) nach Anspruch 1, 2 oder 3,
wobei der verstärkte Kunststoff ein Füllmaterial enthält, das ausgewählt ist aus der Gruppe bestehend aus: Graphit, Montmorillonit, Talk, Vermiculit, Antimonsulfid, Arsensulfid, Kupfersulfid, Gips, Molybdänsulfid, Borhydroxid, Schwefel und Wismutsulfid.

5. Zwingenelement (12) nach Anspruch 1, 2 oder 3,
wobei das Fylüssigkristallpolymer ein vollständig aromatisches Flüssigkristallpolymer ist.

6. Zwingenelement (12) nach Anspruch 1, 2 oder 3,
wobei das Zwingenelement einen Wärmeausdehnungskoeffizienten in seiner Radialrichtung aufweist, der dem Wärmeausdehnungskoeffizienten in seiner Axialrichtung im wesentlichen gleich ist.

7. Zwingenelement (12) nach Anspruch 1, 2 oder 3,
wobei das Material einen Wärmeausdehnungskoeffizienten aufweist, der innerhalb eines Bereichs von 20 Prozent des Wärmeausdehnungskoeffizienten der Lichtleiter liegt.

8. Verfahren zum Herstellen eines Zwingenelements (12) zum Abschließen eines Lichtleiterübertragungselements (13), wobei das Zwingenelement (12) gebildet wird aus einem Körperelement (24) mit einer sich durch dieses hindurcherstreckenden Bohrung (26), entlang derer sich ein Ende des Lichtleiterübertragungselements (13) erstreckt, wobei ein Abschnitt des Körperelements (24) einen Abschnitt der Bohrung (26) mit reduziertem Durchmesser beinhaltet, entlang dessen ein freigelegter Abschnitt eines Lichtleiterelements (14) des Lichtleiterübertragungselements (13) angeordnet wird, wobei das Verfahren folgende Schritte umfaßt: Auswählen eines Lichtleiterübertragungselements (13); Auswählen eines Materials für den Abschnitt des Körperelements (24) aus der Gruppe bestehend aus Flüssigkristallpolymeren und verstärkten Flüssigkristallpolymeren, wobei das Material außerdem im wesentlichen dieselbe Schleif- und Polierhärte wie das Material des Lichtleiterelements (14) des Lichtleiterübertragungselements (13) aufweist und das Material im wesentlichen denselben Wärmeausdehnungskoeffizienten in Axialrichtung wie das Lichtleiterelement (14) des Lichtleiterübertragungselements (13) aufweist; sowie Formen des Materials zu dem Zwingenelement (12); wodurch bei mit dem Zwingenelement (12) abgeschlossenen Lichtleiterübertragungselement (13) jegliche Axialbewegung zwischen dem Zwingenelement (12) und dem Lichtleiterelement (14) des Lichtleiterübertragungselements (13), die das Lichtleiterelement (14) dazu veranlaßt, sich gegenüber seiner ursprünglichen Position vorzuschieben oder zurückzuziehen, im wesentlichen überwunden wird.

**Patentansprüche für folgende Vertragsstaaten : IT, NL, SE**

1. Zwingenelement (12), das ein Abschließende eines Lichtleiterübertragungselements (13) enthält, mit einem Körperelement (24) mit einer sich durch dieses hindurcherstreckenden Bohrung, entlang derer sich das Ende des Lichtleiterübertragungselements (13) erstreckt, wobei ein Abschnitt des Körperelements einen Abschnitt der Bohrung (22) mit reduziertem Durchmesser aufweist, entlang dessen ein freigelegter Abschnitt eines Lichtleiterelements (14) des Lichtleiterübertragungselements (13) angeordnet ist, wobei wenigstens der genannte Abschnitt des Körperelements aus einem Kunststoffmaterial hergestellt ist, dadurch gekennzeichnet, daß das genannte Material im wesentlichen denselben Wärmeausdehnungskoeffizienten in Axialrichtung wie das Material des Lichtleiterelements (14) besitzt, wobei das Material ausgewählt ist aus der Gruppe bestehend aus: Flüssigkristallpolymeren und verstärkten Flüssigkristallpolymeren, wodurch jegliche axiale Bewegung zwischen dem Abschnitt des Körperelements (24) und dem Lichtleiterelement (14), die das Lichtleiterelement (14) dazu veranlaßt, sich gegenüber seiner ursprünglichen Position vorzuschieben oder zurückzuziehen, im wesentlichen überwunden ist.

2. Zwingenelement (12) nach Anspruch 1,
   weiterhin dadurch gekennzeichnet, daß das Körperelement. (24) zur Überwindung der Axialbewegung aus einem Material mit im wesentlichen demselben Wärmeausdehnungskoeffizienten in Axialrichtung wie das Material des Lichtleiterübertragungselements (13) hergestellt ist.

3. Zwingenelement (12) nach Anspruch 1 oder 2,
   wobei das Material einen Wärmeausdehnungskoeffizienten innerhalb eines Temperaturbereichs von ca. -50 bis 150°C aufweist, wobei dies in derselben Größenordnung liegt wie bei Lichtleiterübertragungselementen, die im wesentlichen aus Siliziumdioxidglas dotiert mit indexmodifizierendem Material bestehen, wobei das Material im wesentlichen frei ist von thermischen und elastischen Nachwirkungen in der zu der Lichtleiterachse parallelen Richtung.

4. Zwingenelement (12) nach Anspruch 1, 2 oder 3,
   wobei der verstärkte Kunststoff ein Füllmaterial enthält, das ausgewählt ist aus der Gruppe bestehend aus: Graphit, Montmorillonit, Talk, Vermiculit, Antimonsulfid, Arsensulfid, Kupfersulfid, Gips, Molybdänsulfid, Borhydroxid, Schwefel und Wismutsulfid.

5. Zwingenelement (12) nach Anspruch 1, 2 oder 3,
   wobei das Fylüssigkristallpolymer ein vollständig aromatisches Flüssigkristallpolymer ist.

6. Zwingenelement (12) nach Anspruch 1, 2 oder 3,
   wobei das Zwingenelement einen Wärmeausdehnungskoeffizienten in seiner Radialrichtung aufweist, der dem Wärmeausdehnungskoeffizienten in seiner Axialrichtung im wesentlichen gleich ist.

7. Zwingenelement (12) nach Anspruch 1, 2 oder 3,
   wobei das Material einen Wärmeausdehnungskoeffizienten aufweist, der innerhalb eines Bereichs von 20 Prozent des Wärmeausdehnungskoeffizienten der Lichtleiter liegt.

8. Zwingenelement (12) nach Anspruch 1, 2 oder 3,
   wobei das Zwingenelement (12) außerdem im wesentlichen dieselbe Schleif- und Polierhärte wie das Material des Lichtleiterelements (14) des Lichtleiterübertragungselements (13) aufweist.

9. Verfahren zum Herstellen eines Zwingenelements (12) zum Abschließen eines Lichtleiterübertragungselements (13), wobei das Zwingenelement (12) gebildet wird aus einem Körperelement (24) mit einer sich durch dieses hindurcherstreckenden Bohrung (26), entlang derer sich ein Ende des Lichtleiterübertragungselements (13) erstreckt, wobei ein Abschnitt des Körperelements (24) einen Abschnitt der Bohrung (26) mit reduziertem Durchmesser beinhaltet, entlang dessen ein freigelegter Abschnitt eines Lichtleiterelements (14) des Lichtleiterübertragungselements (13) angeordnet wird, wobei das Verfahren folgende Schritte umfaßt: Auswählen eines Lichtleiterübertragungselements (13); Auswählen eines Materials für den Körperabschnitt des Zwingenelements (12) aus der Gruppe bestehend aus Flüssigkristallpolymeren und verstärkten Flüssigkristallpolymeren, wobei das Material im wesentlichen denselben Wärmeausdehnungskoeffizienten in Axialrichtung wie das Lichtleiterelement (14) des Lichtleiterübertragungselements (13) aufweist; sowie Formen des Materials zu dem Zwingenelement (12); wodurch bei mit dem Zwingenelement (12) abgeschlossenen Lichtleiterübertragungselement (13) jeglicher Kolbeneffekt zwischen dem Zwingenelement (12) und dem Lichtleiterelement (14) des Lichtleiterübertragungselements (13), durch den das Lichtleiterelement (14) dazu veranlaßt wird, sich gegenüber seiner ursprünglichen Position vorzuschieben oder zurückzuziehen, im wesentlichen überwunden wird.

## Revendications

## Revendications pour les Etats contractants suivants : DE, FR, GB

1. Elément à virole (12) contenant une extrémité de terminaison d'un élément de transmission (13) à fibre optique, comportant un élément de corps (24) à travers lequel s'étend un alésage le long duquel l'extrémité de l'élément (13) de transmission à fibre optique s'étend, une partie dudit élément de corps comprenant un tronçon de diamètre réduit dudit alésage (22) le long duquel un tronçon à nu d'un élément (14) à fibre optique de l'élément (13) de transmission à fibre optique est disposé, au moins ladite partie dudit élément de corps étant réalisée en une matière plastique, caractérisé en ce que ladite matière présente sensiblement le même coefficient de dilatation thermique dans la direction axiale que celui de l'élément (14) à fibre optique, ladite matière étant choisie dans le groupe constitué de : polymères à cristaux liquides et polymères à cristaux liquides contenant une charge, de manière que tout mouvement axial entre ladite partie dudit élément de corps (24) et ledit élément à fibre (14) amenant ledit élément à fibre (14) à faire saillie ou à rentrer par rapport à sa position initiale soit essentiellement maîtrisé, et en ce que ledit élément à virole (12) présente en outre essentiellement la même dureté de rectification et de polissage que la matière de l'élément (14) à fibre optique de l'élément (13) de transmission à fibre optique.

2. Elément à virole (12) selon la revendication 1, caractérisé en outre en ce que ledit élément de corps (24) est réalisé en une matière ayant sensiblement le même coefficient de dilatation thermique dans la direction axiale que celui de l'élément (13) de transmission à fibre optique pour maîtriser ledit mouvement axial.

3. Elément à virole (12) selon la revendication 1 ou 2, dans lequel ladite matière possède un coefficient de dilatation thermique, dans une plage de températures d'environ -50 à 150°C, qui est du même ordre de grandeur que celui d'éléments de transmission à fibres optiques constitués essentiellement de verre au dioxyde de silicium dopé avec des matières de modification d'indice, ladite matière étant essentiellement exempte d'effets secondaires thermiques et élastiques dans la direction parallèle à l'axe de la fibre.

4. Elément à virole (12) selon la revendication 1, 2 ou 3, dans lequel ladite matière plastique contenant une charge comprend une charge choisie dans le groupe constitué des graphite, montmorillonite, talc, vermiculite, sulfure d'antimoine, sulfure d'arsenic, sulfure cuivrique, gypse, sulfure de molybdène, hydroxyde de bore, soufre et sulfure de bismuth.

5. Elément à virole (12) selon la revendication 1, 2 ou 3, dans lequel ledit polymère à cristaux liquides est un polymère à cristaux liquides entièrement aromatique.

6. Elément à virole (12) selon la revendication 1, 2 ou 3, dans lequel ledit élément à virole présente un coefficient de dilatation thermique dans sa direction radiale qui est essentiellement égal à celui qu'il présente dans sa direction axiale.

7. Elément à virole (12) selon la revendication 1, 2 ou 3, dans lequel ladite matière présente un coefficient de dilatation thermique différent de moins de 20 % de celui des fibres optiques.

8. Procédé de réalisation d'un élément à virole (12) pour terminer un élément (13) de transmission à fibre optique, ledit élément à virole (12) étant constitué d'un élément de corps (24) à travers lequel s'étend un alésage (26) le long duquel une extrémité de l'élément (13) de transmission à fibre optique s'étend, une partie dudit élément de corps comprenant un tronçon de diamètre réduit dudit alésage (26) le long duquel un tronçon à découvert d'un élément (14) à fibre optique de l'élément (13) de transmission à fibre optique est disposé, le procédé consistant à sélectionner un élément (13) de transmission à fibre optique ; à sélectionner, dans le groupe constitué de polymères à cristaux liquides et de polymères à cristaux liquides contenant une charge, une matière pour ladite partie de l'élément de corps (24), ladite matière présentant en outre essentiellement la même dureté de rectification et de polissage que la matière de l'élément (14) à fibre optique de l'élément (13) de transmission à fibre optique, et ladite matière ayant essentiellement le même coefficient de dilatation thermique dans la direction axiale que celui de l'élément (14) à fibre optique de l'élément (13) de transmission à fibre optique ; et à former ledit élément à virole (12) dans ladite matière ; grâce à quoi, lorsque ledit élément (13) de transmission à fibre optique est terminé à l'aide dudit élément (12) à virole, tout mouvement axial entre ledit élément (12) à virole et ledit élément (14) à fibre optique dudit élément (13) de transmission à fibre optique, amenant ledit élément (14) à fibre à faire saillie ou à rentrer par rapport à sa position initiale, soit essentiellement maîtrisé.

**Revendications pour les Etats contractants suivants : IT, NL, SE**

1. Elément à virole (12) contenant une extrémité de terminaison d'un élément (13) de transmission à fibre optique, comprenant un élément de corps (24) à travers lequel s'étend un alésage le long duquel l'extrémité de l'élément (13) de transmission à fibre optique s'étend, une partie dudit élément de corps comprenant un tronçon de diamètre réduit dudit alésage (22) le long duquel un tronçon à découvert d'un élément (14) à fibre optique de l'élément (13) de transmission à fibre optique est disposé, au moins ladite partie dudit élément de corps étant réalisée en matière plastique, caractérisé en ce que ladite matière présente sensiblement le même coefficient de dilatation thermique dans la direction axiale que celui de l'élément (14) à fibre optique, ladite matière étant choisie dans le groupe constitué de : polymères à cristaux liquides et polymères à cristaux liquides contenant une charge, grâce à quoi tout mouvement axial entre ladite partie dudit élément de corps (24) et ledit élément (14) à fibre, amenant ledit élément (14) à fibre à faire saillie ou à rentrer par rapport à sa position initiale, soit essentiellement maîtrisé.

2. Elément à virole (12) selon la revendication 1, caractérisé en outre en ce que ledit élément de corps (24) est réalisé en une matière ayant sensiblement le même coefficient de dilatation thermique dans la direction axiale que celui de l'élément (13) de transmission à fibre optique pour maîtriser ledit mouvement axial.

3. Elément à virole (12) selon la revendication 1 ou 2, dans lequel ladite matière possède un coefficient de dilatation thermique, dans une plage de températures d'environ -50 à 150°C, qui est du même ordre de grandeur que celui des éléments de transmission à fibres optiques constitués essentiellement de verre au dioxyde de silicium dopé avec une matière de modification d'indice, ladite matière étant essentiellement exempte d'effets secondaires thermiques et élastiques dans la direction parallèle à l'axe de la fibre.

4. Elément à virole (12) selon la revendication 1, 2 ou 3, dans lequel ladite matière plastique contenant une charge comprend une charge choisie dans le groupe constitué des graphite, montmorillonite, talc, vermiculite, sulfure d'antimoine, sulfure d'arsenic, sulfure cuivrique, gypse, sulfure de molybdène, hydroxyde de bore, soufre et sulfure de bismuth.

5. Elément à virole (12) selon la revendication 1, 2 ou 3, dans lequel ledit polymère à cristaux liquides est un polymère à cristaux liquides entièrement aromatique.

6. Elément à virole (12) selon la revendication 1, 2 ou 3, dans lequel ledit élément à virole possède un coefficient de dilatation thermique, dans sa direction radiale, qui est essentiellement égal à celui qu'il présente dans sa direction axiale.

7. Elément à virole (12) selon la revendication 1, 2 ou 3, dans lequel ladite matière possède un coefficient de dilatation thermique différent de moins de 20 % de celui des fibres optiques.

8. Elément à virole selon la revendication 1, 2 ou 3, dans lequel ledit élément à virole possède en outre essentiellement la même dureté de rectification et de polissage que la matière de l'élément (14) à fibre de l'élément (13) de transmission à fibre optique.

9. Procédé de réalisation d'un élément à virole (12) pour terminer un élément (13) de transmission à fibre optique, ledit élément à virole (12) étant constitué d'un élément de corps (24) à travers lequel s'étend un alésage (26) le long duquel une extrémité de l'élément (13) de transmission à fibre optique s'étend, une partie dudit élément de corps (24) comprenant un tronçon de diamètre réduit dudit alésage (26) le long duquel un tronçon à découvert d'un élément (14) à fibre optique de l'élément (13) de transmission à fibre optique est disposé, le procédé consistant à sélectionner un élément (13) de transmission à fibre optique ; à sélectionner, dans le groupe constitué de polymères à cristaux liquides et de polymères à cristaux liquides contenant une charge, une matière pour ladite partie de corps dudit élément à virole (12), ladite matière ayant sensiblement le même coefficient de dilatation thermique, dans la direction axiale, que celui de l'élément (14) à fibre optique de l'élément (13) de transmission à fibre optique ; et à former ledit élément à virole (12) dans ladite matière ; grâce à quoi, lorsque ledit élément (13) de transmission à fibre optique est terminé à l'aide dudit élément à virole (12), tout effet de piston entre ledit élément à virole (12) et ledit élément (14) à fibre optique dudit élément (13) de transmission à fibre optique, amenant ledit élément à fibre (14) à faire saillie ou à rentrer par rapport à sa position initiale, soit essentiellement maîtrisé.

FIG. 1

FIG. 2

EP 0 235 192 B2

FIG. 3

FIG. 4

FIG. 5

FIG. 6

20

FIG. 7

FIG. 8

FIG. 9

FIG. 10